# DEMANDE DE BREVET EUROPEEN

(11) **EP 1 533 186 A2**
(43) Date de publication de la demande: **25.05.2005**
(21) Numéro de dépôt: 04364071.3
(22) Date de dépôt: 24.11.2004
(51) Int. Cl.: B60R 9/045

(54) **Barre de galerie escamotable pour véhicule automobile et procédé de montage correspondant**

(30) Priorité: 24.11.2003 FR 0313742; 24.11.2003 FR 0313744
(71) Demandeur: WAGON SAS, 79302 Bressuire Cédex (FR)
(72) Inventeur: Jolivet, David, 79300 Bressuire (FR)
(74) Mandataire: Bioret, Ludovic

(57) **Abrégé**

L'invention concerne une barre de galerie pour véhicule automobile, comprenant une traverse s'étendant entre deux pieds de solidarisation audit véhicule, caractérisée en ce que lesdits pieds sont mobiles parallèlement à ladite traverse, de façon que ladite barre puisse prendre au moins deux positions :
- une position escamotée dans laquelle ladite traverse est en contact avec le pavillon dudit véhicule et
- une position de portage dans laquelle ladite traverse est surélevée par rapport à ladite position escamotée.

## Description

Le domaine de l'invention est celui des équipements automobiles et de la construction de véhicules automobiles. L'invention concerne notamment les galeries montées sur un véhicule automobile.

Depuis longtemps différents types de galeries sont prévus pour être montés sur des véhicules automobiles.

Les premières galeries étaient constituées d'un seul bloc que l'on pouvait solidariser au toit du véhicule automobile. Ces galeries présentaient l'inconvénient d'être très encombrantes une fois démontées du toit du véhicule et peu esthétiques.

D'autre part, les opérations de montage ou de démontage étaient complexes à mettre en oeuvre. Ainsi, le temps nécessaire aux démontage et montage dissuadait la plupart du temps l'utilisateur d'enlever la galerie une fois qu'il n'en avait plus besoin.

Pour pallier ces inconvénients, les équipementiers automobiles ont conçu des galeries constituées de deux barres de traverse parallèles à disposer sur le pavillon du véhicule. Ainsi, les deux barres sont plus simples à monter ou démonter et l'encombrement dû aux barres est beaucoup moins important. Cependant, cette solution nécessite toujours une étape de montage nécessitant un outillage adapté. Elle présente toujours un problème d'encombrement dû aux barres qu'il faut stocker.

Ainsi, l'utilisateur est encore une fois tenté de laisser les barres solidarisées lorsqu'il n'en a plus besoin.

Une solution à ces inconvénients à été proposé récemment pour équiper des véhicules haute gamme de type monospace. Elle met en oeuvre une galerie constituée de deux barres solidarisées sur le pavillon de ces véhicules. Ces barres peuvent être coulissantes le long du pavillon de façon à pouvoir se réunir et former un aileron à l'arrière du monospace lorsque l'on a pas besoin de la galerie. Ainsi les problèmes des montage et démontage (en négligeant l'étape rapide et simple de repliement des barres vers l'arrière du pavillon qui peut même être automatisée) et du stockage sont éliminés.

Cependant, lorsque l'utilisateur n'en a pas besoin, toutes ces galeries présentent trois inconvénients importants liés à leur présence sur le pavillon du véhicule. Elles génèrent un bruit aérodynamique dont l'intensité augmente avec la vitesse du véhicule qui peut être très désagréable pour le conducteur et l'oblige souvent à adapter sa vitesse de sorte à en diminuer l'intensité. Ensuite, la présence des galeries peut poser un problème d'esthétique, la ligne du véhicule se trouve modifiée et, les éléments de la galerie ne sont pas forcément de la même couleur que le pavillon. Enfin, l'aérodynamisme du véhicule se trouvant altéré, la consommation de carburant augmente de façon non négligeable.

Par ailleurs, selon un aspect particulier de l'invention, on note que cette technique reste complexe et coûteuse, et est en outre limitée à un certain type de véhicules. Il faut prévoir un ensemble de pièces mobiles et de guidage, et le montage et les réglages sont peu aisés, du fait notamment des tolérances dans les dimensions des véhicules.

En d'autres termes, la mise en oeuvre de cette technique suppose un temps de main d'oeuvre important, chez les constructeurs, alors que ces derniers cherchent bien sûr en permanence à limiter les temps de montage, et à simplifier les opérations correspondantes.

L'invention a notamment pour objectif de pallier ces inconvénients de l'art antérieur.

Plus particulièrement, l'invention a pour objectif de fournir des barres de galerie pour véhicule automobile ne nécessitant pas d'opération de montage ou de démontage.

Un autre objectif de l'invention est de proposer une telle technique, qui ne génère pas ou peu de bruit aérodynamique lorsque le véhicule est en mouvement.

Encore un autre objectif est de fournir une telle technique, qui n'altère pas, ou peu, l'esthétique du véhicule.

Un autre objectif de l'invention est de fournir une telle technique qui n'augmente pas la consommation de carburant du véhicule.

Selon un aspect particulier de l'invention, un objectif est de fournir une technique permettant d'éliminer ou de réduire, chez les constructeurs automobiles, les étapes de montage et de réglage des équipements du pavillon d'un véhicule automobile et notamment des barres de galerie.

Un autre objectif de l'invention est de fournir une telle technique permettant de réduire le temps de main d'oeuvre lié au montage du véhicule chez les constructeurs et ainsi de limiter le coût associé.

Ces objectifs, ainsi que d'autres, qui apparaîtront plus clairement par la suite, sont atteints selon l'invention à l'aide de barres de galeries pour véhicule automobile, comprenant une traverse s'étendant entre deux pieds de solidarisation au véhicule, lesquels sont mobiles parallèlement à la traverse, de façon que la barre puisse prendre au moins deux positions :
- une position escamotée dans laquelle la traverse est en contact avec le pavillon du véhicule et
- une position de portage dans laquelle la traverse est surélevée par rapport à la position escamotée.

Ainsi, les barres de galeries peuvent rester en permanence sur le véhicule. L'invention permet donc d'éviter les opérations de montage et de démontage des barres de galerie, car elles restent montées sur le pavillon du véhicule.

La position escamotée des barres de galerie permet de s'affranchir efficacement des problèmes :
- de bruit aérodynamique ;
- d'esthétique ;
- et de consommation de carburant,
sans nécessiter le démontage des barres.

Avantageusement, les pieds des barres de galerie sont montés basculant.

Selon un premier mode de réalisation préférentiel, la partie supérieure d'au moins un des pieds coulisse par rapport à la traverse, lors du passage de la position de portage à la position escamotée.

Avantageusement, au moins une des extrémités de la traverse présente au moins une lumière de guidage, coopérant avec au moins un élément guidé solidaire du pied.

On obtient ainsi une cinématique simple et efficace.

On peut notamment prévoir qu'au moins un pied comprend deux parties présentant chacune un ergot de guidage.

Selon un deuxième mode de réalisation préférentiel, au moins une extrémité de la traverse pénètre à l'intérieur d'au moins un des pieds, lors du passage de la position de portage à la position escamotée.

Bien entendu, les deux extrémités de la traverse peuvent fonctionner symétriquement. Cela est vrai également pour tous les autres modes de réalisation.

Avantageusement, les deux extrémités de la traverse sont équipées d'un soufflet de protection.

Le soufflet permet de protéger et dissimuler les parties en contact de coulissement.

Selon une mise en oeuvre préférentielle, dans ladite position escamotée, la traverse est encastrée au moins en partie dans un logement prévu à cet effet dans le pavillon.

Ainsi, selon ce mode de réalisation, la traverse pénètre dans un décrochement du pavillon, en position escamotée.

Avantageusement, ce logement est conçu de façon que la barre de galerie dans la position escamotée affleure avec le pavillon.

Ainsi, la barre ne dépasse plus du pavillon, ce qui procure, entre autre, un résultat esthétique intéressant.

Selon une mise en oeuvre préférentielle, dans la position escamotée, la traverse est posée simplement sur le pavillon.

Avantageusement, au moins un des pieds est articulé sur un support de pied de façon que l'articulation se situe sensiblement dans le plan du pavillon.

Selon un mode de réalisation préférentiel, le passage de la position de portage à la position escamotée et réciproquement, est actionné par des moyens de motorisation.

Ainsi, l'opération de passage de la position de portage à la position escamotée et réciproquement est simple et rapide, et peut le cas échéant être effectuée en roulant ou à du le moins depuis l'intérieur du véhicule.

Avantageusement, les moyens de motorisation sont contrôlés depuis une télécommande et/ou une commande sur la planche de bord.

Ainsi, lorsqu'un utilisateur, n'ayant pas besoin des barres de galerie, a oublié de les faire passer en position escamotée avant de démarrer son véhicule, il va pouvoir effectuer cette opération sans avoir a arrêter son véhicule.

L'invention concerne également un panneau de pavillon de véhicule automobile, destiné à être rapporté sur le châssis du véhicule et qui porte de façon fixe au moins une barre de galerie telle que décrite précédemment, de façon que le panneau de pavillon soit fourni, puis monté sur le véhicule, pré-équipé des barres de galerie.

Ainsi le panneau de pavillon automobile est pré-équipé de barres de galerie et peut être fourni à un constructeur automobile, cette technique permettant d'éliminer ou de réduire, chez les constructeurs automobiles, les étapes de montage et de réglage des équipements du pavillon d'un véhicule automobile et notamment des barres de galerie. Cela permet et ainsi limiter les coûts associés.

L'utilisateur, quant à lui, est soulagé des opérations de montage et de démontage des barres de galerie déjà montées sur le pavillon du véhicule.

Avantageusement, le panneau de pavillon est réalisé dans un matériau transparent, tel que du verre.

L'avènement des toits transparents, par exemple en verre, impose de nouvelles méthodes d'assemblage et de montage, d'une part des pavillons sur le véhicule, et d'autre part des équipements tels que les barres de galerie. Cela permet de simplifier et d'optimiser le montage du véhicule chez les constructeurs.

L'invention concerne également les procédés d'assemblage d'un pavillon de véhicule automobile tel que décrit précédemment, ainsi que les véhicules automobiles équipés d'au moins une barre de galerie telle que décrite précédemment.

D'autres caractéristiques et avantages de l'invention apparaîtront à la lecture de la description suivante d'un mode de réalisation préférentiel, donné à titre de simple exemple illustratif et non limitatif, et des dessins annexés parmi lesquels :
- la figure 1 illustre de façon schématique un véhicule automobile équipé de barres de galerie selon l'invention ;
- la figure 2 est un schéma d'une version des barres de galerie du véhicule de la figure 1 selon laquelle l'extrémité de la traverse pénètre le pied de la barre lors de l'escamotage.
- la figure 3 est un schéma d'une version des barres de galerie selon laquelle les pieds coulissent par rapport à la traverse de la barre.
- la figure4 illustre une vue éclatée du pied de la barre de galerie de la figure 3.
- la figure 5 est un schéma représentant une partie du pavillon du véhicule équipé de barres de galerie en position escamotée dans le cas où la barre est encastrée dans le pavillon.
- la figure 6 est une coupe transversale d'une portion du pavillon du véhicule de la figure 5.
- la figure 7 est un schéma représentant le pavillon du véhicule équipé de barres de galerie dans les positions escamotée et de portage dans le cas où la barre est posée sur le pavillon ;
- la figure 8 illustre de façon schématique un panneau de pavillon de véhicule automobile équipé de barres de galerie selon l'invention et le véhicule correspondant ;
- la figure 9 est un schéma illustrant les différentes étapes du procédé de montage et d'assemblage du panneau de pavillon de la figure 8.

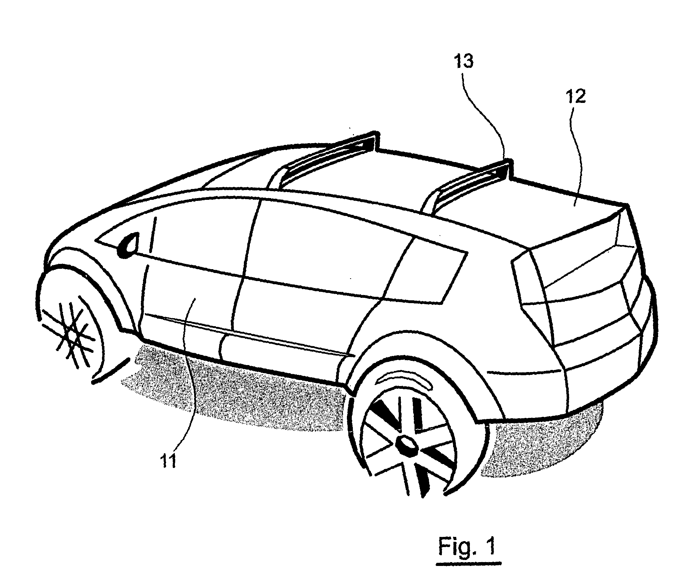

L'invention est donc prévue pour équiper un véhicule automobile et notamment son pavillon tel que par exemple le véhicule illustré schématiquement en figure 1.

Le principe général de l'invention est de mettre en oeuvre un dispositif comprenant des barres de galerie pour véhicule automobile rendues escamotables par encastrement dans le pavillon du véhicule ou par mise en contact avec le pavillon, lorsque l'on a plus besoin de transporter une charge.

Dans le mode particulier de réalisation de l'invention décrit dans la présente demande de brevet, le véhicule automobile 11 comprend deux barres de galerie 13 montées sur le pavillon 12 du véhicule.

Par souci de simplification, on ne décrit par la suite qu'une barre, les deux fonctionnant en principe de façon similaire. Par ailleurs, bien qu'on ne présente que des barres transversales, il est clair que l'invention s'applique également au cas où les barres de galerie sont disposées parallèlement à l'axe principal du véhicule.

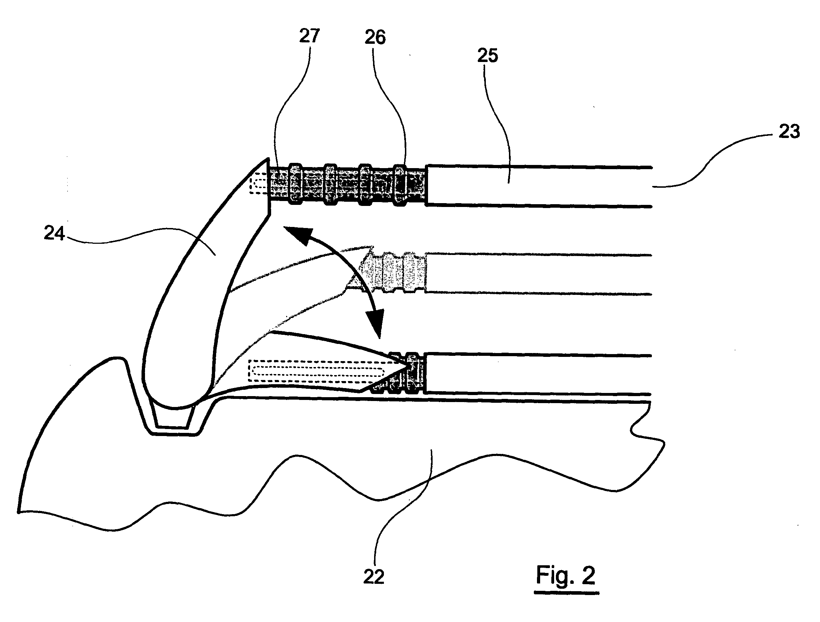

Dans un premier mode de réalisation illustré par la figure 2, une barre de galerie 23 montée sur le pavillon 22 du véhicule comprend deux pieds 24 et une traverse 25. Dans ce mode particulier, l'extrémité 27 de la traverse 25 pénètre l'intérieur du pied 24 et permet ainsi le basculement de la barre de galerie 33 lors du passage de sa position de portage à sa position escamotée.

Un soufflet 26 est prévu pour protéger l'extrémité 27 de la traverse 25 des effets de l'humidité, des chocs et d'autres événements ou détériorations mais aussi éventuellement de maintenir une quantité définie de lubrifiant pour réduire les frottements. Le soufflet peut être réalisé en caoutchouc ou dans toute autre matière adéquate pour réaliser la fonction recherchée.

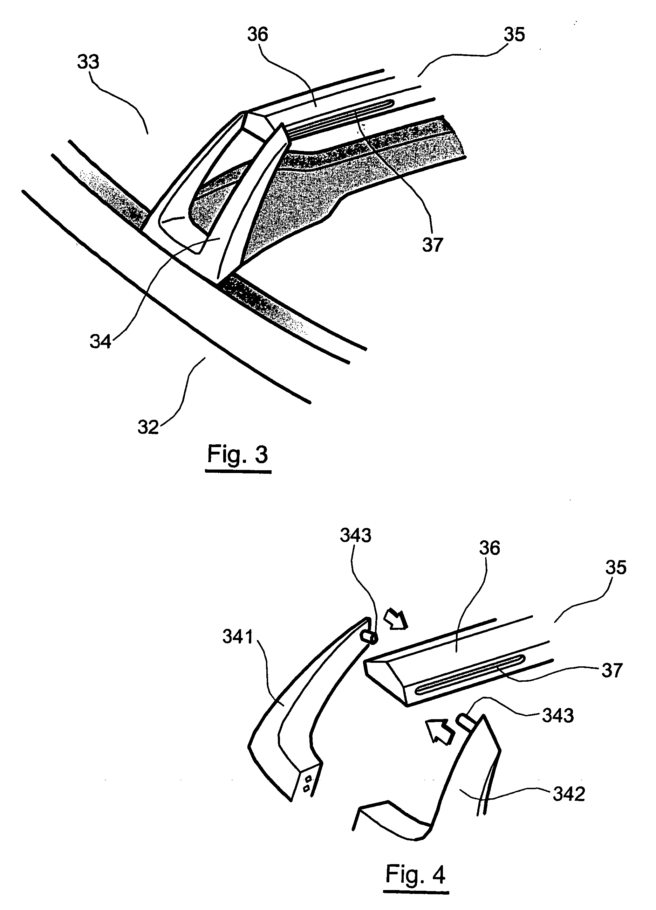

Dans un deuxième mode de réalisation illustré par la figure 3, une barre de galerie 33 montée sur le pavillon 32 du véhicule comprend deux pieds 34 et une traverse 35. Dans ce mode particulier, l'extrémité 36 de la traverse 35 est équipée d'une lumière de guidage 37 traversante, ou de deux lumière symétriques. Au moins un élément guidé coopérant avec la ou les lumières de guidage 37 est solidarisé à chaque pied 34 et permet le basculement de la barre de galerie 33 lors du passage de sa position de portage à sa position escamotée.

Dans le cas de ce deuxième mode de réalisation, les pieds 34 des barres de galeries 33 peuvent être conçu en deux parties, symétriques ou non, comme illustré par la figure 4. Un premier élément 341 et un deuxième élément 342 portent chacun en leur partie supérieure un ergot de guidage 343. Lors de l'assemblage de la barre de galerie, les deux ergots 343 des deux éléments du pied 34 viennent se placer dans la lumière de guidage 37 de la traverse 35 lors de la solidarisation des deux éléments du pied.

Selon ces différents modes de réalisation, l'escamotage des barres de galerie 13 du pavillon 12 du véhicule automobile 11 permet de réduire ou même d'éliminer les problèmes de bruits aérodynamiques, d'esthétique et de consommation de carburant.

Plusieurs approches peuvent être envisagées pour l'escamotage des barres de galerie.

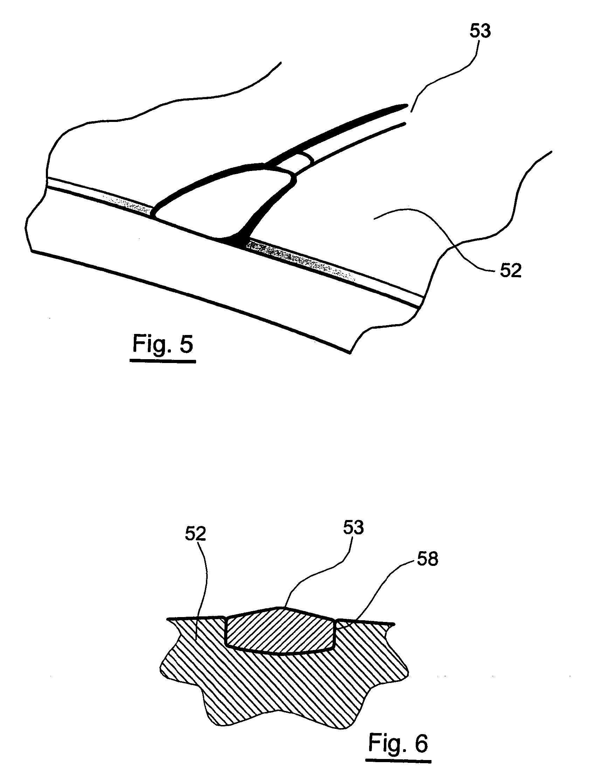

Une approche illustrée par la figure 5 et par la vue en coupe de la figure 6 permet d'obtenir, en position escamotée, une barre de galerie 53 qui affleure avec le pavillon 52 du véhicule automobile. Pour se faire, la barre 53 s'encastre dans un logement 58 prévu dans le pavillon 52.

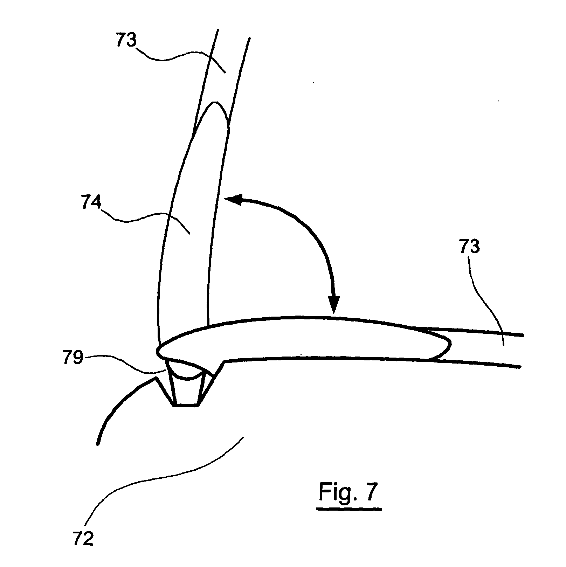

Dans une autre approche illustrée par la figure 7, la barre de galerie 73 vient se poser sur le pavillon 72 en position escamotée. Dans ce mode de réalisation, le pied 74 peut être articulé sur un support de pied 79 solidarisé au pavillon 72 et permettant que l'articulation se situe sensiblement dans le plan du pavillon.

Une autre approche peut faire intervenir une technique intermédiaire où la barre de galerie n'est qu'en partie encastrée, sa partie supérieure dépassant du pavillon.

Selon un mode de mise en oeuvre, le passage de la position de portage à la position escamotée et vice-versa, des barres de galerie 13 sur le pavillon 12 du véhicule automobile 11, est assuré par des moyens de motorisation. Ces moyens de motorisation peuvent être contrôlés par une télécommande permettant de commuter la position des barres 13 depuis l'extérieur et/ou l'intérieur du véhicule. Selon un autre mode de mise en oeuvre, cette fonction est assurée via une commande située à l'intérieur du véhicule, sur la planche de bord. Ainsi l'utilisateur n'a aucune opération manuelle à effectuer pour le montage et la mise en oeuvre des barres de galerie sur son véhicule.

Dans tous les modes de réalisation envisagés dans la description précédente, les deux pieds d'un barre de galerie ainsi que leurs mécanismes permettant à la barre de basculer sont symétriques. Cependant, l'homme du métier pourra sans difficulté excessive envisager des modes de réalisation où les deux pieds ne sont pas symétriques. Par exemple, on peut prévoir qu'une seule des deux extrémités d'une traverse pénètre le pied qui lui est associé ou possède une lumière de guidage en fonction du mode de réalisation envisagé. Dans d'autres modes de réalisation, une extrémité d'une traverse peut pénétrer le pied qui lui est associé sur une longueur moins importante que la longueur de pénétration de l'autre extrémité.

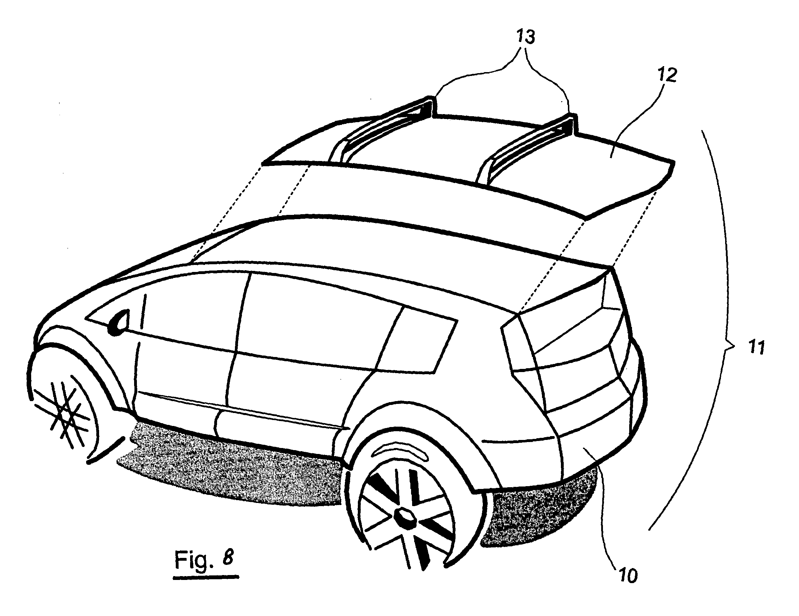

La figure 8 illustre, le panneau de pavillon 12 pré-équipé notamment de deux barres de galerie 13 escamotables telles que décrites précédemment, prévu pour équiper le châssis 10 d'un véhicule automobile 11.

Le montage et les réglages des équipements, et notamment des barres, du panneau de pavillon de l'invention peuvent être réalisés par un équipementier automobile ce qui soulage les constructeurs automobiles et leur permet d'économiser le temps de main d'oeuvre correspondant.

Les équipementiers fabriquent de telles galeries mais aussi beaucoup d'autres dispositifs (tels que les éclairages d'intérieur, les antennes, divers moyens de motorisation de ces équipements, le troisième feu stop...) pouvant être solidarisés au pavillon de véhicules automobiles.

Ainsi, les équipementiers peuvent adapter et optimiser le montage du panneau de pavillon et de ses équipements selon l'invention, et fournir des solutions intégrées dont le montage est grandement simplifié.

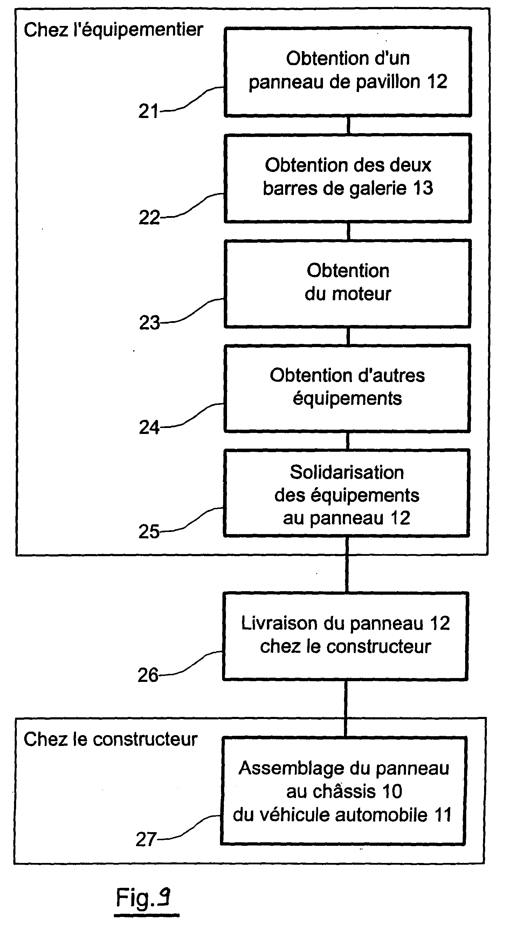

Les étapes du procédé d'assemblage du panneau de pavillon selon l'invention sont illustrées par la figure 9.

Une première étape 21 comprend l'obtention du panneau de pavillon 12 classiquement en verre mais pouvant être réalisé dans tout autre matériau transparent ou même opaque.

Une deuxième étape 22 comprend l'obtention des barres de galerie 13.

Une troisième étape 23 comprend l'obtention d'un moyen de motorisation pouvant commander les barres de galerie 13.

Une quatrième étape 24 comprend l'obtention d'éventuels autres équipements pour le panneau de pavillon du véhicule 12 tels par exemple que des antennes, un troisième feu stop ou des ailerons pour les équipement extérieurs au véhicule ou tels que des consoles avant ou arrière, des ciels de toit ou des poignées pour les équipements intérieurs.

Une cinquième étape 25 comprend la solidarisation par vissage ou par tout autre moyen de fixation des équipements dont notamment les barres de galerie 13 au panneau de pavillon 12. En particulier, le moyen de motorisation peut être solidarisé au panneau de pavillon 12. Dans ce cas, des câbles placés sous gaine peuvent permettre de lier les barres de galerie 13 au moyen de motorisation.

Une sixième étape 26 comprend la livraison du panneau 12 au constructeur automobile.

Il est à noter que les panneaux de pavillons selon l'invention peuvent être fournis, avantageusement à un constructeur automobile, avec leurs barres de galerie dans une position escamotée afin, notamment, de réduire leur encombrement. Mais ils peuvent également être fournis avec leurs barres de galerie en position de portage afin, notamment, de permettre leur rangement en superposition sans craindre de détériorer les surfaces des panneaux.

Une septième étape 27 comprend l'assemblage, préférentiellement par collage, du panneau de pavillon 12 au châssis 10 du véhicule automobile 11.

Les cinq étapes 21 à 25, précédemment décrites, peuvent être effectuées chez un équipementier automobile, l'étape 27 étant, quant à elle, effectuée préférentiellement chez le constructeur du véhicule automobile. Ainsi, on se rend compte que le temps de main d'oeuvre du constructeur concernant l'équipement du pavillon de ses véhicules peut être considérablement réduit grâce à l'invention.

La présence de barres de galerie 13 sur le panneau de pavillon 12 peut faciliter la manipulation des panneaux une fois assemblés.

On notera que l'approche ci-dessus peut être généralisée à d'autres types de barres de galerie. D'une façon générale, le constructeur est soulagé des étapes complexes de montage et de réglage des équipements du pavillon. Les coûts et temps de main d'oeuvre associés sont ainsi réduits. L'utilisateur, quant à lui, est soulagé des opérations de montage et de démontage des barres de galerie déjà montées sur le pavillon du véhicule.

## Revendications

1. Barre de galerie pour véhicule automobile, comprenant une traverse s'étendant entre deux pieds de solidarisation audit véhicule,
**caractérisée en ce que** lesdits pieds sont mobiles parallèlement à ladite traverse, de façon que ladite barre puisse prendre au moins deux positions :
- une position escamotée dans laquelle ladite traverse est en contact avec le pavillon dudit véhicule et
- une position de portage dans laquelle ladite traverse est surélevée par rapport à ladite position escamotée.

2. Barre de galerie selon la revendication 1, **caractérisée en ce que** lesdits pieds basculent.

3. Barre de galerie selon l'une quelconque des revendications 1 et 2,
**caractérisée en ce que** la partie supérieure d'au moins un desdits pieds coulisse par rapport à ladite traverse, lors du passage de ladite position de portage à ladite position escamotée.

4. Barre de galerie selon la revendication 3, **caractérisée en ce qu'**au moins une des extrémités de ladite traverse présente au moins une lumière de guidage, coopérant avec au moins un élément guidé solidaire dudit pied.

5. Barre de galerie selon la revendication 4 **caractérisée en ce que** ledit au moins un pied comprend deux parties présentant chacune un ergot de guidage.

6. Barre de galerie selon l'une quelconques des revendications 1 et 2,
**caractérisée en ce qu'**au moins une extrémité de ladite traverse pénètre à l'intérieur d'au moins un desdits pieds, lors du passage de ladite position de portage à ladite position escamotée.

7. Barre de galerie selon la revendication 6, **caractérisée en ce que** les deux extrémités de ladite traverse sont équipées d'un soufflet de protection.

8. Barre de galerie selon l'une quelconque des revendications 1 à 7,
**caractérisée en ce que** dans ladite position escamotée, ladite traverse est encastrée au moins en partie dans un logement prévu à cet effet dans ledit pavillon.

9. Barre de galerie selon la revendication 8 **caractérisée en ce que** ledit logement est conçu de façon que ladite barre de galerie dans ladite position escamotée affleure avec ledit pavillon.

10. Barre de galerie selon l'une quelconque des revendications 1 à 9,
**caractérisée en ce que** dans ladite position escamotée, ladite traverse est posée sur ledit pavillon.

11. Barre de galerie selon la revendication 10 **caractérisée en ce que** au moins un desdits pieds est articulé sur un support de pied de façon que l'articulation se situe sensiblement dans le plan dudit pavillon.

12. Barre de galerie selon l'une quelconque des revendications 1 à 11,
**caractérisée en ce que** le passage de ladite position de portage à ladite position escamotée et réciproquement, est actionné par des moyens de motorisation.

13. Barre de galerie selon la revendication 12 **caractérisée en ce que** lesdits moyens de motorisation sont contrôlés depuis une télécommande et/ou une commande sur la planche de bord.

14. Panneau de pavillon de véhicule automobile, destiné à être rapporté sur le châssis dudit véhicule,
**caractérisé en ce qu'**il porte de façon fixe au moins une barre de galerie selon l'une quelconque des revendications 1 à 13,
de façon que ledit panneau de pavillon soit fourni, puis monté sur le véhicule, pré-équipé de la ou desdites barres de galerie.

15. Panneau de pavillon de véhicule automobile selon la revendication 14, **caractérisé en ce** ledit panneau de pavillon est réalisé dans un matériau transparent, tel que du verre.

16. Procédé d'assemblage d'un pavillon de véhicule automobile comprenant les étapes suivantes :
- Obtention d'un panneau de pavillon de véhicule automobile ;
- Obtention d'au moins une barre de galerie selon l'une quelconque des revendications 1 à 13 ;
- Solidarisation, de façon fixe, de la ou desdites barres de galerie audit panneau de pavillon, pour fournir un panneau de pavillon pré-équipé ;
- Livraison dudit panneau de pavillon pré-équipé ;
- assemblage dudit panneau de pavillon pré-équipé sur le châssis dudit véhicule.

17. Véhicule automobile comprenant au moins une barre de galerie comprenant une traverse s'étendant entre deux pieds de solidarisation audit véhicule,
**caractérisée en ce que** lesdits pieds sont mobiles parallèlement à ladite traverse, de façon que ladite barre puisse prendre au moins deux positions :
- une position escamotée dans laquelle ladite traverse est en contact avec le pavillon dudit véhicule et
- une position de portage dans laquelle ladite traverse est surélevée par rapport à ladite position escamotée.

18. Véhicule automobile **caractérisée en ce qu'**il comprend au moins un panneau de pavillon selon l'une quelconque des revendications 14 ou 15.
